Europäisches Patentamt

European Patent Office

Office européen des brevets

(11) Veröffentlichungsnummer : **0 155 468**
**B1**

(12)　　　　　EUROPÄISCHE PATENTSCHRIFT

(45) Veröffentlichungstag der Patentschrift :
27.05.87

(51) Int. Cl.⁴ : **F 16 C 33/78**

(21) Anmeldenummer : **85100875.5**

(22) Anmeldetag : **29.01.85**

(54) Abdichtung für eine Wälzlager-Drehverbindung.

(30) Priorität : 09.03.84 DE 3408664

(43) Veröffentlichungstag der Anmeldung :
25.09.85 Patentblatt 85/39

(45) Bekanntmachung des Hinweises auf die Patenterteilung : 27.05.87 Patentblatt 87/22

(84) Benannte Vertragsstaaten :
DE FR GB IT

(56) Entgegenhaltungen :
FR-A- 1 383 004
FR-A- 2 369 455
FR-E-　93 150
FR-E-　93 711
US-A- 2 908 536

(73) Patentinhaber : INA Wälzlager Schaeffler KG
Industriestrasse 1-3 Postfach 1220
D-8522 Herzogenaurach (DE)

(72) Erfinder : Basener, Helmut
Freiwaldauerstrasse 23
D-8552 Höchstadt (DE)

## Beschreibung

Die Erfindung betrifft eine Abdichtung für eine Wälzlager-Drehverbindung, welche aus zwei konzentrisch ineinander angeordneten Laufringen besteht, zwischen denen Wälzkörper abrollen, wobei der eine Laufring den anderen Laufring axial überragt und in diesem den anderen Laufring überragenden Teil in einer zum anderen Laufring hin offenen Umfangsnut eine elastische Dichtung trägt, die eine Axialdichtlippe aufweist, die gleitend gegen die Stirnfläche des anderen Laufrings anliegt. .

Eine solche Abdichtung ist beispielsweise aus der US-A-2 908 536 bekannt. Während sie zur Abdichtung gegen üblichen Staub und Schmutz gut geeignet ist, bietet sie jedoch keinen sicheren Schutz vor dem Eindringen von Wasser, was nicht nur Korrosionsschäden bewirken, sondern auch die in einer Drehverbindung oft integrierte elektrische Energieversorgung über Schleifringe in Frage stellen kann.

Die Erfindung hat sich die Aufgabe gestellt, die bekannte Dichtung mit geringstem konstruktiven Aufwand so zu verbessern, daß das Eindringen von Wasser in die Wälzlager-Drehverbindung mit hoher Sicherheit verhindert wird.

Erfindungsgemäß wird diese Aufgabe dadurch gelöst, daß der andere Ring zwischen der Anlagestelle dieser Dichtlippe und seiner dem einen Laufring zugewandten Mantelfläche einen sich axial nach außen erstreckenden Umfangskragen aufweist, gegen welchen eine zweite, radial wirkende Dichtlippe der elastischen Dichtung anliegt. In Kombination mit der radial wirkenden Dichtlippe bildet dieser sich axial nach außen erstreckende Umfangskragen insbesondere bei einem Einbau des Lagers mit vertikaler Drehachse eine zusätzliche Barriere vor dem Eindringen von Wasser infolge des zu überwindenden Höhenunterschiedes.

Um eine auf Dauer sichere Abdichtung zu gewährleisten, kann die radial wirkende und am Umfangskragen anliegende Dichtlippe unter der Einwirkung einer Feder, insbesondere einer sich über den ganzen Dichtungsumfang erstreckenden Wurmfeder stehen.

Um sowohl die Dichtwirkung weiter zu steigern, als auch den Verschleiß an den Dichtlippen zu verringern, kann der zwischen den beiden Dichtlippen befindliche Ringraum mit Fett gefüllt sein. Dadurch wird gleichzeitig Rostbildung an den Anlageflächen der Dichtlippen vermieden, was ebenfalls die Lebensdauer der Dichtlippen erhöht.

Eine weitere Ausgestaltung der Erfindung sieht vor, die elastische Dichtung in einer Umfangsnut aufzunehmen, die zur Stirnfläche des einen Laufringes hin offen ist, wobei die elastische Dichtung annähernd bündig mit dieser Stirnfläche abschließt und an der den einen Laufring überdeckenden Dichtungsfläche eine oder mehrer konzentrische Umfangswülste vorgesehen sind, die die Laufringstirnfläche überragen. Diese Umfangswülste erfüllen die Aufgabe, die Drehverbindung gegen eine Anschlußkonstruktion abzudichten, wodurch auf zusätzliche Abdichtmaßnahmen in Form von Rundschnurringen oder Dichtmasse verzichtet werden kann.

Um bei der Herstellung des den sich axial erstreckenden Umfangskragen tragenden Laufringes die erforderliche Zerspanarbeit in Grenzen zu halten, kann der Umfangskragen durch ein Band gebildet sein, welches in eine axial offene Umfangsnut in der Stirnfläche dieses Laufringes eingesetzt ist.

Zusätzlich kann das Band mit einem sich radial erstreckenden Umfangsrand versehen sein, der gegen die Stirnfläche des anderen Laufringes anliegt, und dessen radiale Erstreckung so groß ist, daß die Axialdichtlippe gleitend gegen ihn anliegt.

In beiden Fällen kann das Band aus polymerem Werkstoff bestehen, wodurch nicht nur Rostbildung an der Anlagefläche der Radialdichtlippe vermieden werden kann, sondern sich auch die Reibung vermindert.

In den Zeichnungen sind drei Ausführungsbeispiele der Erfindung im Teil Längsschnitt dargestellt.

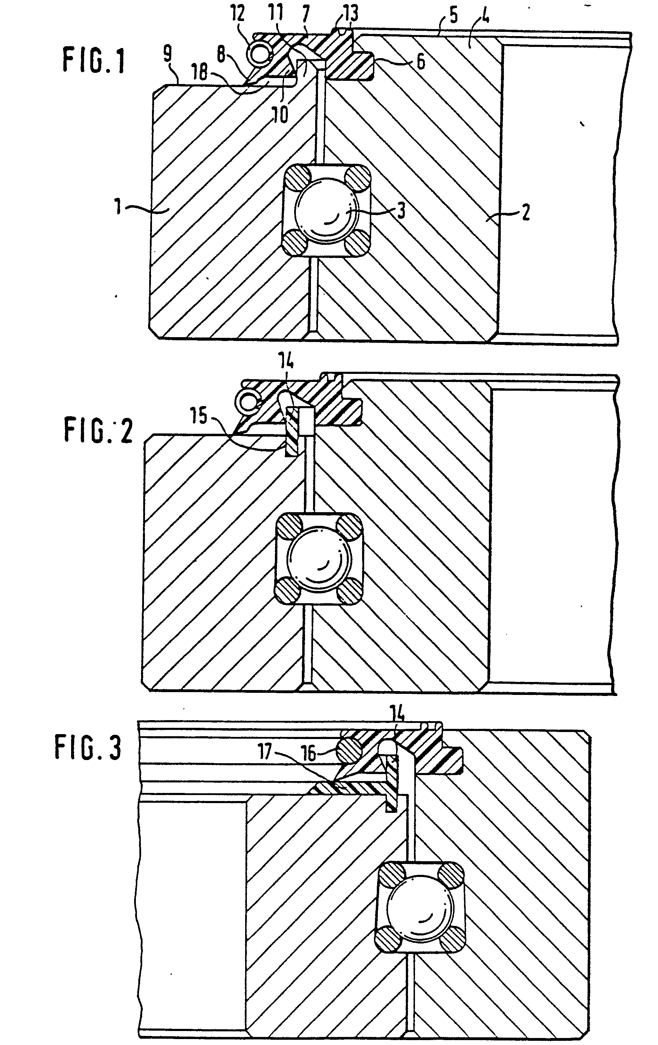

Die in Fig. 1 dargestellte Wälzlager-Drehverbindung ist als Drahtkugellager ausgebildet, bei dem zwischen dem Außenlaufring 1 und dem Innenlaufring 2 auf Laufdrähten Kugeln 3 abrollen. Der Innenlaufring 2 überragt mit seinem oberen Abschnitt 4 den Außenlaufring 1 und weist in diesem Abschnitt die teilweise auch axial zur Stirnfläche 5 des Innenlaufringes 2 hin offene Radialnut 6 auf. Diese Radialnut nimmt die elastische Dichtung 7 auf, die mit ihrer Axialdichtlippe 8 gleitend an der Stirnfläche 9 des Außenlaufringes 1 anliegt. Sie weist zusätzlich die Radialdichtlippe 10 auf, die an dem sich axial erstreckenden Umfangskragen 11 anliegt. Die Radialdichtlippe 10 steht unter Einwirkung der Wurmfeder 12, die formschlüssig in eine Umfangsnut der Dichtung 7 eingesetzt ist. Schließlich weist die Dichtung in dem Bereich, in dem die Radialnut 6 axial offen ist, zwei konzentrische Umfangswülste 13 auf, die die Stirnfläche 5 des Innenringes 2 überragen und damit eine Abdichtung gegen eine Anschlußkonstruktion bewirken, an welcher der Innenring 2 befestigt wird.

Die in Figur 2 dargestellte Variante unterscheidet sich von der nach Fig. 1 nur dadurch, daß der Umfangskragen, gegen den die Radialdichtlippe anliegt, durch ein Band 14 aus polymerem Werkstoff gebildet ist, das in eine axial offene Umfangsnut 15 des Außenlaufringes 1 eingesetzt ist.

Während bei den vorhergehenden Ausführungsbeispielen stets der Innenlaufring die Dichtung 7 trug, deren Dichtlippen gleitend gegen den Außenlaufring anlagen, ist dies bei der Ausführung nach Fig. 3 umgekehrt. Dies hat im wesentlichen nur zur Folge, daß anstelle der Wurmfeder 12 hier ein als Druckfeder wirkender Drahtring 16 eingesetzt ist. Als weiterer Unterschied ist zu erkennen, daß an das Band 14 aus polymerem Werkstoff ein radialer Umfangsrand 17 angeformt ist, gegen den die Axialdichtlippe anläuft.

In allen drei Fällen ist es möglich, den Ringraum zwischen den beiden Dichtlippen, der in Fig. 1 mit 18 bezeichnet ist, mit Fett zu füllen.

### Patentansprüche

1. Abdichtung für eine Wälzlager-Drehverbindung, welche aus zwei konzentrisch ineinander angeordneten Laufringen (1, 2) besteht, zwischen denen Wälzkörper (3) abrollen, wobei der eine Laufring (2) den anderen Laufring (1) axial überragt und in diesem den anderen Laufring überragenden Teil in einer zum anderen Laufring hin offenen Umfangsnut (6) eine elastische Dichtung (7) trägt ; die eine Axialdichtlippe (8) aufweist, die gleitend gegen die Stirnfläche (9) des anderen Laufrings anliegt, dadurch gekennzeichnet, daß der andere Laufring (1) zwischen der Anlagestelle dieser Dichtlippe und seiner dem einen Laufring (2) zugewandten Mantelfläche einen sich axial nach außen erstreckenden Umfangskragen (11) aufweist, gegen welchen eine zweite, radial wirkende dichtlippe (10) der elastischen Dichtung (7) anliegt.

2. Abdichtung nach Anspruch 1, dadurch gekennzeichnet, daß die radial wirkende Dichtlippe (10) unter der Einwirkung einer Feder (12), insbesondere einer sich über den ganzen Dichtungsumfang erstreckenden Wurmfeder steht.

3. Abdichtung nach Anspruch 1 oder 2, dadurch gekennzeichnet, daß der Ringraum (18) zwischen den beiden Dichtlippen (8, 10) mit Fett gefüllt ist.

4. Abdichtung nach Anspruch 1, 2 oder 3, dadurch gekennzeichnet, daß die die elastische Dichtung (7) aufnehmende Umfangsnut (6) zur Stirnfläche (5) des einen Laufringes (2) hin offen ist, die elastische Dichtung (7) annähernd bündig mit dieser Stirnfläche (5) abschließt und an der den einen Laufring (2) überdeckenden Dichtungsfläche eine oder mehrere konzentrische Umfangswülste (13) vorgesehen sind, die die Laufringstirnfläche (5) überragen.

5. Abdichtung nach Anspruch 1, dadurch gekennzeichnet, daß der sich axial erstreckende Umfangskragen (11) durch ein Band (14) gebildet ist, welches in eine axial offene Umfangsnut (15) in der Stirnfläche (9) des anderen Laufringes (1) eingesetzt ist.

6. Abdichtung nach Anspruch 5, dadurch gekennzeichnet, daß das Band (14) mit einem sich radial erstreckenden Umfangsrand (17) versehen ist, der gegen die Stirnfläche (9) des anderen Laufringes (1) anliegt, und dessen radiale Erstreckung so groß ist, daß die Axialdichtlippe (8) gleitend gegen ihn anliegt.

7. Abdichtung nach Anspruch 5 oder 6, dadurch gekennzeichnet, daß das Band (14) aus polymerem Werkstoff besteht.

### Claims

1. A sealing device for a rolling bearing slewing ring, which consists of two races (1, 2) which are disposed concentrically one inside the other and between which rolling members (3) roll, one race (2) projecting axially beyond the other race (1) and bearing an elastic seal (7) in this part which projects between the said other race, the said elastic seal being disposed in a peripheral groove (6) which is open towards the said other race, said elastic seal (7) comprising an axial sealing lip (8) which bears slidingly against the end face (9) of the said other race, characterised in that the said other race (1) has an axially outwardly extending peripheral collar (11) between the point of abutment of said sealing lip and its outer surface facing the said one race (2), against which peripheral collar (11) a second radially acting sealing lip (10) of the elastic seal (7) bears.

2. A sealing device according to claim 1, characterised in that the radially acting sealing lip (10) is biased by a spring (12), more particularly a worm spring extending over the entire seal periphery.

3. A sealing device according to claim 1 or 2, characterised in that the annular space (18) between the two sealing lips (8, 10) is filled with grease.

4. A sealing device according to claim 1, 2 or 3, characterised in that the peripheral groove (6) receiving the elastic seal (7) is open towards the end face (5) of the said one race (2), the elastic seal (7) terminates substantially flush with said end face (5) and one or more concentric peripheral beads (13) which project beyond the race end face (5) are provided at the seal surface which covers the said one race (2).

5. A sealing device according to claim 1, characterised in that the axially extending peripheral collar (11) is formed by a band (14) which is inserted into an axially open peripheral groove (15) in the end face (9) of the said other race (1).

6. A sealing device according to claim 5, characterised in that the band (14) is provided with a radially extending peripheral edge (17) which bears against the end face (9) of the other race (1), and it extends radially to an extent such that the axial sealing lip (8) bears slidingly against it.

7. A sealing device according to claim 5 or 6, characterised in that the band (14) consists of polymeric material.

### Revendications

1. Dispositif d'étanchéité pour système d'accouplement à rotation par palier à roulement constitué par deux bagues de roulement (1, 2) disposées concentriquement à l'intérieur l'une de l'autre, entre lesquelles roulent des organes de roulement (3), l'une des bagues de roulement (2) faisant saillie axialement par rapport à l'autre bague de roulement (1) et portant dans cette partie en saillie par rapport à l'autre bague de roulement, dans une rainure circonférentielle (6) ouverte en direction de l'autre bague de roulement, un joint d'étanchéité élastique (7) qui comporte une lèvre d'étanchéité axiale (8) qui s'applique par glissement contre la face terminale (9) de l'autre bague de roulement, caractérisé en ce que l'autre bague de roulement (1) présente, entre le point d'application de cette lèvre d'étanchéité et sa surface périphérique orientée vers la première bague de roulement (2), une collerette circonférentielle (11) s'étendant axialement vers l'extérieur, contre laquelle s'applique une seconde lèvre d'étanchéité (10), agissant radialement, du joint d'étanchéité élastique (7).

2. Dispositif d'étanchéité suivant la revendication 1, caractérisé en ce que la lèvre d'étanchéité (10) agissant radialement est soumise à l'action d'un ressort (12), en particulier d'un ressort torique s'étendant sur toute la circonférence du joint d'étanchéité.

3. Dispositif d'étanchéité suivant la revendication 1 ou 2, caractérisé en ce que l'intervalle annulaire (18) ménagé entre les deux lèvres d'étanchéité (8, 10) est rempli de graisse.

4. Dispositif d'étanchéité suivant la revendication 1, 2 ou 3, caractérisé en ce que la rainure circonférentielle (6) recevant le joint d'étanchéité élastique (7) est ouverte en direction de la face terminale (5) de l'une des bagues de roulement (2), le joint d'étanchéité élastique (7) se terminant sensiblement à l'affleurement de cette face terminale (5) et un ou plusieurs bourrelets circonférentiels concentriques (13) étant prévus sur la surface du joint d'étanchéité recouvrant l'une des bagues de roulement (2), ces bourrelets faisant saillie par rapport à la face terminale (5) de cette bague de roulement.

5. Dispositif d'étanchéité suivant la revendication 1, caractérisé en ce que la collerette circonférentielle (11) s'étendant axialement est formée par une bande (14) qui est insérée dans une rainure circonférentielle (15) ouverte axialement ménagée dans la face terminale (9) de l'autre bague de roulement (1).

6. Dispositif d'étanchéité suivant la revendication 5, caractérisé en ce que la bande (14) est munie d'un rebord circonférentiel (17) s'étendant radialement, qui s'applique contre la face terminale (9) de l'autre bague de roulement (1) et dont l'étendue radiale est telle que la lèvre d'étanchéité axiale (8) s'applique contre lui par glissement.

7. Dispositif d'étanchéité suivant la revendication 5 ou 6, caractérisé en ce que la bande (14) est en matériau polymère.

0 155 468

FIG.1

FIG.2

FIG.3